# EUROPEAN PATENT APPLICATION

(11) **EP 1 232 695 A2**
(43) Date of publication of application: **21.08.2002**
(21) Application number: 02425067.2
(22) Date of filing: 11.02.2002
(51) Int. Cl.: A23N 4/04, A23N 4/08

(54) **Apparatus for the removal of the stone from fruits**

(30) Priority: 19.02.2001 IT RM010082
(71) Applicant: Domenico Manca S.p.A., 07041 Alghero (SS) (IT)
(72) Inventor: Manca, Domenico, 07041 Alghero (SS) (IT); Vado, Giovanni Antonio, 07041 Alghero (SS) (IT)
(74) Representative: Iannone, Carlo Luigi

(57) **Abstract**

The invention relates to an apparatus for the removal of the stone from fruits comprising fruit feeding means (1), fruit advancement means (2), a fruit beating chamber (3), provided with outlet openings (6), suitably realised for the specific fruit, a rotating filter (7), or separator, provided with an extraction view (8) and at least a product discharge (10) and at least a stone and residual discharge (11), along said apparatus being provided nozzles for spraying liquid.

## Description

The present invention concerns an apparatus for the removal of the stone from fruits.

More specifically, the invention concerns an apparatus of the above kind that allows eliminating the stone from fruits, such as olives, in a complete and tidy way.

The solution suggested according to the present invention particularly allows to remove the stone of fruits with large and hard stones, and particularly fruits having hard stone such as olives, medlars, plums, peaches, apricots, etc.

As it is well known, apparatuses for removing stones exist, that are used to produce olive paste or jams.

However, apparatuses presently employed are characterised by an unsatisfactory efficiency.

In the known solutions, stone is not cleaned and separated from the fruit paste.

Mainly, apparatuses presently used do not make an optimum cleaning of the stone. Furthermore, often a large percentage of the stones is broken or chopped, thus mixing with the paste obtained, with the consequent "contamination" of the obtained product.

Object of the present invention is that of providing an apparatus allowing obtaining more pure products, with a higher salubrity guarantee.

Another object of the present invention is that of providing an apparatus allowing to obtain a product having organoleptic features, with a delicate taste, and, under the analytical point of view, even with differences between 50 and 70% less, thus obtaining a higher time stability of the liquid products obtained.

It is therefore specific object of the present invention an apparatus for the removal of the stone from fruits comprising fruit feeding means, fruit advancement means, a fruit beating chamber, provided with outlet openings, suitably realised for the specific fruit, a rotating filter, or separator, provided with an extraction view and at least a product discharge and at least a stone and residual discharge, along said apparatus being provided nozzles for spraying liquid.

According to the invention, said fruit advancement means can be comprised of a feeding screw.

Still according to the invention, said beating chamber provides openings for inspection and cleaning.

Furthermore, according to the invention, beating blades are provided within said beating chamber.

Further, according to the invention, said rotating filter can provide a product extraction screw.

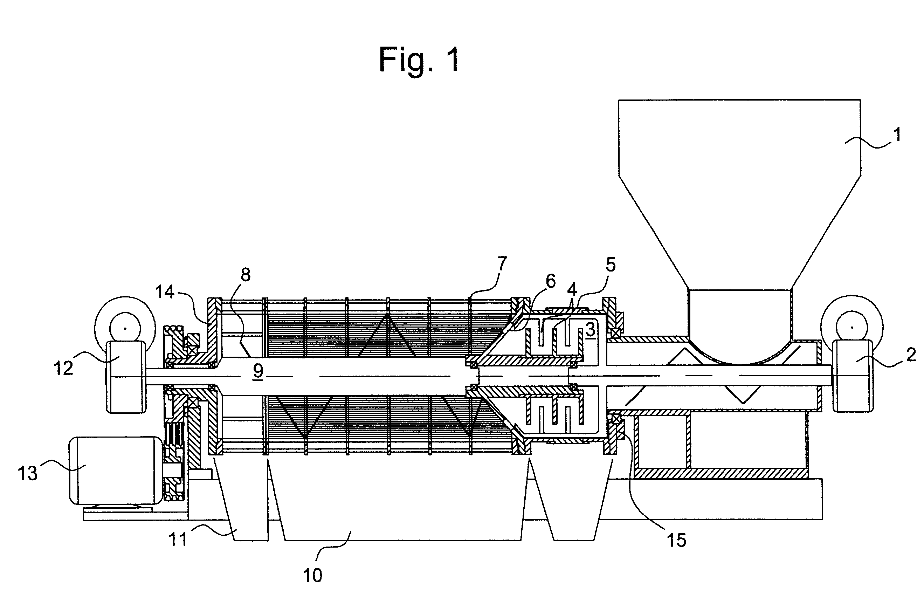

The present invention will be now described, for illustrative but not limitative purposes, according to its preferred embodiments, with particular reference to the figure of the enclosed drawing schematically showing an embodiment of the apparatus according to the invention.

Observing now the enclosed figure, the apparatus according to the invention, in the illustrated embodiment, provides a feeding hopper 1, at the bottom of which a feeding screw 2 is provided, transferring the fruits into a beating chamber 3.

Said beating chamber 3 provides a plurality of beating blades 4. Above the chamber 3, inspection cover 5 are provided, while in front of the chamber, transfer openings 6 are provided, for the outlet of the product.

After the chamber 3, the apparatus according to the invention provides a rotating filter 7, or separator, provided with an extraction screw 8, having a motion axis 9.

Under the rotating filter 7, a product discharge 10 and a separated stone discharge 11 are provided.

By the reference number 12, the operation of the extraction system is indicated, while by the reference number 13, the main operation system is indicated, and by the reference number 14 the dragging flange is indicated. Finally, the rotating support is indicated by the reference number 15.

In the following, a process made by the apparatus according to the present invention will be described.

At first, the product is fed within the hopper 1, and then, by operation of the screw 2 and of the rotating blades 4 adjusting the enter of the stones within the beating chamber 3.

Stones and paste obtained during the working inside the chamber 3 exit from the calibrated openings 6 that are provided in a conical position. Obviously, as already said, openings 6 can be modified on the basis of the fruits to be treated by the apparatus according to the invention.

A possible cleaning of the beating chamber 3 is carried out by the inspection cover 5.

Within the rotating filter 7, the separation of the fruit paste from the stone occurs: hard bodies (stones) go toward the discharge 11, while paste is discharged through the discharge 10 by the extraction screw 8, that is integral with the motion axis 9 operated by the feeding system 12.

Along the line of the apparatus, nozzles (not shown) are provided, all along the length of the same apparatus, spraying liquid (water or else) for cleaning the system and to make its operation easier.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for the removal of the stone from fruits, **characterised in that** it comprises fruit feeding means, fruit advancement means, a fruit beating chamber, provided with outlet openings, suitably realised for the specific fruit, a rotating filter, or separator, provided with an extraction view and at least a product discharge and at least a stone and residual discharge, along said apparatus being provided nozzles for spraying liquid.

2. Apparatus for the removal of the stone from fruits according to claim 1, **characterised in that** said fruit advancement means are comprised of a feeding screw.

3. Apparatus for the removal of the stone from fruits according to one of the preceding claims, **characterised in that** said beating chamber provides openings for inspection and cleaning.

4. Apparatus for the removal of the stone from fruits according to one of the preceding claims, **characterised in that** beating blades are provided within said beating chamber.

5. Apparatus for the removal of the stone from fruits according to one of the preceding claims, **characterised in that** said rotating filter provides a product extraction screw.

6. Apparatus for the removal of the stone from fruits according to each one of the preceding claims, substantially as illustrated and described.
